# EUROPEAN PATENT APPLICATION

(11) **EP 4 118 959 A1**
(43) Date of publication of application: **18.01.2023**
(21) Application number: 22184051.5
(22) Date of filing: 11.07.2022
(51) Int. Cl.: A01K 13/00

(54) **HORSE SHOEING FORMER**

(30) Priority: 12.07.2021 GB 202110038
(71) Applicant: Benson, Ben, Banbury, Oxfordshire OX15 5EH (GB)
(72) Inventor: Benson, Ben, Banbury, Oxfordshire OX15 5EH (GB)
(74) Representative: Pure Ideas Limited

(57) **Abstract**

Described is an arrangement for providing a former for a horse's hoof, the arrangement including a sheet being substantially planar and having a first face, the sheet being formed of a compressibly deformable material, the sheet being of a size adequate to accommodate a horse shoe, a layer of adhesive disposed on the first face of the sheet the layer of adhesive being configured to releasably adhere to a horse shoe, and a removable element removably affixed to and covering the layer of adhesive, wherein when a force is applied to the sheet by way of a horse shoe, the sheet is configured to deform in a non-reversible way, so as to form a cavity between the sheet and a horse's foot, along with a method of use of the same.

## Description

The present invention relates to devices for shoeing a horse, and particularly to devices used to devices for improving application of adhesive applied during the horse shoeing process.

When a shoe is applied to a horse's hoof, the shoe which is traditionally formed from metal is shaped, usually using heat, to fit the shape of the horse's hoof. The shoe, once shaped, is affixed to the horse's hoof using nails.

In some situations, it is advantageous to apply a glue or sealant to the horse's hoof after a shoe is affixed thereto. In some instances, the glue or sealant may be applied directly to the horse's hoof, and in some instances the glue may be with a mesh or netting, to give the glue or sealant greater structural integrity.

Attempts to improve the application of glue or sealant to a horse's hoof have been made. Previously, a foam board has been proposed, which is adhered to the newly-fitted horse shoe, to enable the glue or sealant to be applied to the horse's hoof, around the shoe, and into the areas that the glue or sealant may provide the most benefit.

Such foam boards are not always successful in use, and may be problematic if the horse moves during the time that the foam board is adhered to the hoof; the board may crack, break, or become dislodged. These perceived issues, along with others, are sought to be addressed by the horse shoeing accessory described herein.

Accordingly, an aspect of the present invention provides an arrangement for providing a former for a horse's hoof, the arrangement including a sheet being substantially planar and having a first face, the sheet being formed of a compressibly deformable material, the sheet being of a size adequate to accommodate a horse shoe, a layer of adhesive disposed on the first face of the sheet the layer of adhesive being configured to releasably adhere to a horse shoe, and a removable element removably affixed to and covering the layer of adhesive, wherein when a force is applied to the sheet by way of a horse shoe, the sheet is configured to deform in a non-reversible way, so as to form a cavity between the sheet and a horse's foot.

Preferably, the sheet is configured to deform, preferably plastically, such that the cavity between the sheet and the horse's foot is substantially recessed with respect to a lowermost face of the horse shoe. Possibly, the sheet may be transparent whereby at least a part of the cavity can be viewed.

Conveniently, the sheet is foldable away from the plane of the sheet to at least partially surround a horse's hoof whereby to facilitate retention of the sheet thereon.

Advantageously, the sheet is formed of cardboard.

Preferably, the sheet is formed of corrugated cardboard.

Conveniently, the corrugated cardboard includes at least one, preferably two, optionally more than two, layers of corrugation.

Advantageously, the sheet further includes an area at or adjacent an edge thereof, onto which the layer of adhesive does not extend.

Preferably, the area is a tab which extends from an edge of the sheet.

Conveniently, the sheet is substantially trapezium-shaped.

Advantageously, the sheet is an isosceles trapezium.

Preferably, the sheet includes scorings or lines of weakness to aid in folding of the sheet.

Conveniently, the scorings or lines of weakness are substantially perpendicular to an edge of the sheet.

Advantageously, the scorings or lines of weakness are perpendicular to the corrugations in the corrugated cardboard.

Preferably, the cavity is arranged to be filled with a glue or sealant.

A further aspect of the invention provides a method of providing a former for filling a cavity in a horse's hoof, comprising providing an arrangement in accordance with any one of claims 1 to 11, removing the removable element so as to expose the layer of adhesive, and placing the sheet against a shoe of a horse so as to deform the sheet whereby to create a cavity.

Preferably, the method further includes the step of folding the sheet away from the plane of the sheet to substantially contain a horse's hoof and to retain the sheet thereon.

Conveniently, the sheet is folded along the scorings or lines of weakness.

Advantageously, the method further includes the step of filling the cavity with glue or sealant.

Embodiments of aspects of the present invention will now be described by way of example with reference to the accompanying drawings in which:
Figure 1 shows an arrangement for providing a former for shoeing a horse;
Figure 2 shows a portion of the arrangement of Figure 1;
Figure 3 shows a further arrangement for providing a former for shoeing a horse;
Figure 4 shows a yet further arrangement for providing a former for shoeing a horse;
Figure 5 shows a schematic view of an arrangement for providing a former in use;
Figure 6 shows a portion of the view of Figure 4;
Figure 7 shows a cross-sectional view of an arrangement for providing a former for shoeing a horse; and
Figure 8 shows a representation of an arrangement for providing a former for shoeing a horse in use.

Broadly, the invention comprises a compressibly deformable element which is configured to be adhered to the shoe of a newly-shod horse to provide a former for enabling effective back-filling of the hoof cavity with a glue or sealant, wherein deformed sections of the element are relatively thin, such that when the cavity is back-filled, the glue or sealant is recessed with respect to the surface of the shoe.

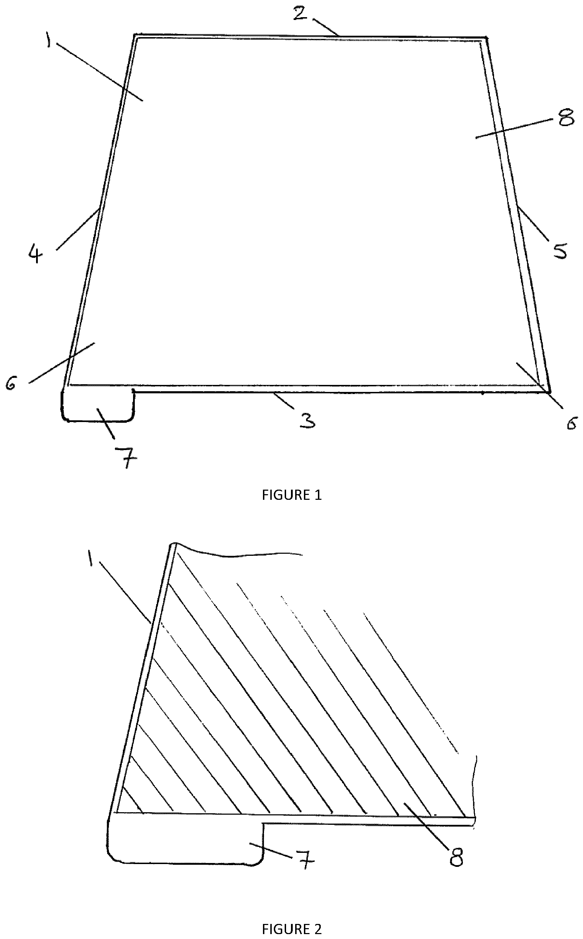

Referring first to Figure 1 there is shown an arrangement 1 for providing a former for shoeing a horse.

The arrangement 1is of a generally symmetrical trapezium shape, with two parallel sides 2, 3 and two sides which are angled in an inward direction 4, 5. This trapezium shape may enable the former to be applied to a horse's hoof or horseshoe such that the lower portions 6 may protrude and may be folded around the horse's hoof.

Folding these lower portions 6 around the horse's hoof may reduce the likelihood of the arrangement 1 being removed accidentally, particular by the horse itself. It is possible that if these lower portions 6 were not present and folded around the horse's hoof, the horse may 'kick off' the arrangement 1 during use.

The shape of the arrangement 1 may be an isosceles or three-side-equal trapezium. In the example shown in Figure 1, the arrangement 1 is an isosceles trapezium.

It is envisaged that any suitable shape may be used for the arrangement 1. A hexagonal, circular, or other shape may be utilised. In some examples, a circular shape may be advantageous, to enable the arrangement 1 to be folded around the horse's hoof.

In some situations, a more complex shape may be advantageous. By way of example, a cross, 'plus', or 'tee' shape could be employed, such that there are portions of the arrangement 1 which may be folded around the horse's hoof.

Returning to a discussion of Figure 1, at one edge of the arrangement 1, there is provided a tab 7. The use of this tab 7 will be discussed later.

A surface of the arrangement is substantially covered in a layer of adhesive 8. Preferably, the layer of adhesive 8 is a double-sided film or tape, such that the adhesive is protected by a protective or backing layer such that when the former is being stored or transported, the layer of adhesive 8 is protected and prevented from unwanted contact with surfaces to which the former is not intended to be stuck.

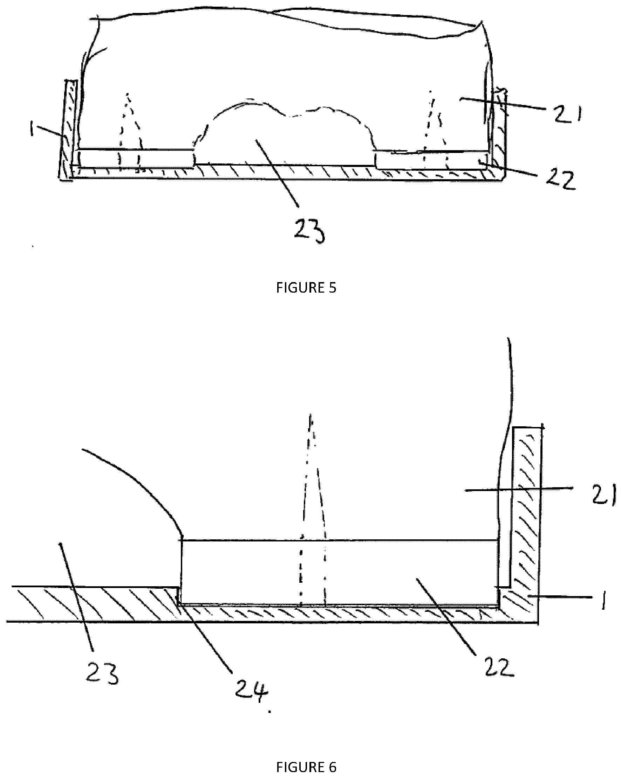

In Figure 1, there is shown the outline of the layer of adhesive 8. This can be seen more clearly in Figure 5, which will be discussed later.

It is to be understood that the layer of adhesive 8 may be a painted, spread, sprayed, or painted layer, and the selected adhesive which forms the layer of adhesive 8 may be chosen based upon the adhesive properties desired. In most cases, it is envisaged that a protective or backing layer be provided over the layer of adhesive 8.

As can be seen in Figure 1, and in more detail in Figure 2, the tab 7 described above is substantially not covered in the layer of adhesive 8. This may enable a user to hold the arrangement 1 and remove the protective or backing layer from the layer of adhesive 8. If the layer of adhesive 8 covered the tab 7, it may be more difficult to remove the protective or backing layer.

Removal of the protective or backing layer may allow the arrangement 1 to be adhered to a horse's hoof or shoe, which is discussed in more detail later.

The arrangement 1 shown in Figures 1 and 2 is formed of corrugated cardboard, but it is envisaged that the arrangement 1 may be formed of any suitable deformably compressible material. Corrugated cardboard with differing layers of corrugation are available, and in dependence upon the intended use, the arrangement 1 may be formed of corrugated cardboard having a particular number of corrugation layers. Experimental use has demonstrated that corrugated cardboard having one or two layers of corrugation is advantageous, because of the compression and deformation profile of such cardboard.

A corrugated cardboard having two layers is preferable, and more specifically a corrugated cardboard having two layers of differing thickness and therefore crushing characteristics is particularly advantageous.

In a particular example, an arrangement 1 formed of corrugated cardboard having two layers is provided. In this particular example, the two layers of corrugation in the cardboard are not of equal thickness; that is to say one layer of corrugation is thicker than the other. The thicker layer of corrugation may compress or crush more readily than the thinner layer of corrugation.

In this example, the layer of adhesive 8 may be provided on the outer face of the arrangement 1 nearest the layer of corrugation which is thicker.

This particular example will be discussed in more detail later.

The arrangement 1 may, however, be formed of any suitable material, as described above. In an example, the arrangement 1 may be formed of a foam or coir material.

The use of cardboard for the arrangement 1 is advantageous, because of the recyclable nature of cardboard. It is envisaged that once a arrangement 1 in accordance with the disclosures of the present application is used, the arrangement 1 may be separated from the layer of adhesive 8, with the cardboard portion recyclable and the layer of adhesive 8 to be disposed of.

It is envisaged that a recyclable adhesive may be sought, such that the whole arrangement 1 may be recycled after use.

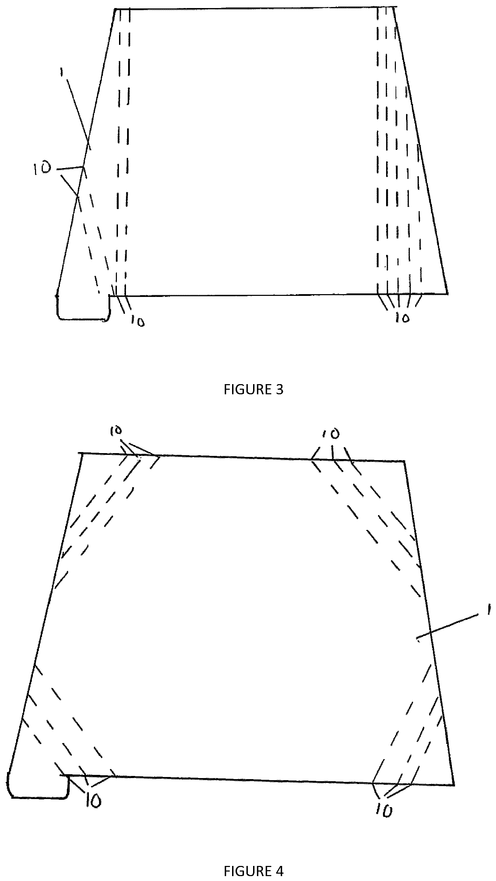

Turning now to Figure 3, an arrangement 1 is shown which includes scorings or lines of weakness 10. These lines may enable the arrangement 1 to be folded more easily.

Figure 4 shows an arrangement 1 which includes scorings or lines of weakness 10 in an arrangement which may enable the arrangement 1 to fold in a way which promotes the folding of the arrangement 1 around the hoof of a horse.

As discussed in more detail later, the arrangement 1 may be folded around the shoe and hoof of a horse when it is adhered thereto. The scorings or lines of weakness 10 of the arrangement 1 shown in Figures 3 and 4 promote such folding. It is envisaged that the scoring or lines of weakness 10 may take other shapes and patterns, to enable folding in particular ways, to allow the arrangement 1 to accommodate different shapes and size of horse shoes and feet.

Figure 5 shows a schematic diagram of a horse's hoof 21, a horse shoe 22, and an arrangement 1 in accordance with the disclosures herein. As can be seen in Figure 4, the compressible nature of the arrangement 1 means that when the arrangement 1 is applied to the horse shoe 22 and horse's hoof 21, the arrangement in contact with the horse shoe 22 compresses, and that which is not does not compress. As can be seen in Figure 4, the portions 6 of the arrangement 1 are folded upwardly, to at least partially surround the horse's hoof 21 and to facilitate retention of the arrangement 1 thereon.

As can be seen in more detail in Figure 6, which is a close up of a portion of Figure 4, the portion of the arrangement 1 underneath the horse shoe 22 is compressed more than that which is not.

Returning to Figure 5, the cavity to be filled with glue or sealant 23 is also shown.

This compression of the portion of the arrangement 1 in contact with the base of the horse shoe 22 means that the uncompressed portion is substantially thicker than the compressed portion, providing a surface which is recessed from the surface of the shoe 22.

This means that when the cavity or gap 23 is back-filled with glue or sealant, the lowermost surface of the glue or sealant, with respect to the natural orientation of the horse shoe 22, does not routinely make contact with the ground.

Referencing Figure 6 for clarity, the amount of recess 24 of the lowermost surface of the glue or sealant may be adjusted by way of the compressibility of the arrangement 1. A more compressible arrangement 1 may give a larger recess 24, with a less compressible former giving a smaller recess 24.

The deformable and compressible nature of the arrangement 1 may also provide a lasting shape in the arrangement 1, in the case that the arrangement 1 must be removed and reapplied. The chosen adhesive and the properties of corrugated cardboard may also make it possible for the arrangement 1 to be removed in one piece and reapplied, reducing the need for use of a second, replacement arrangement 1 in such a scenario.

Returning to a discussion of the particular example discussed above, the compressibility of the thicker of the two layers of the corrugated cardboard may give rise to a relatively large recess, and the thinner of the two layers of the corrugated cardboard may give the arrangement 1 increased rigidity. It may therefore be the case that the thinner of the two layers of the corrugated cardboard may behave as a strengthening layer.

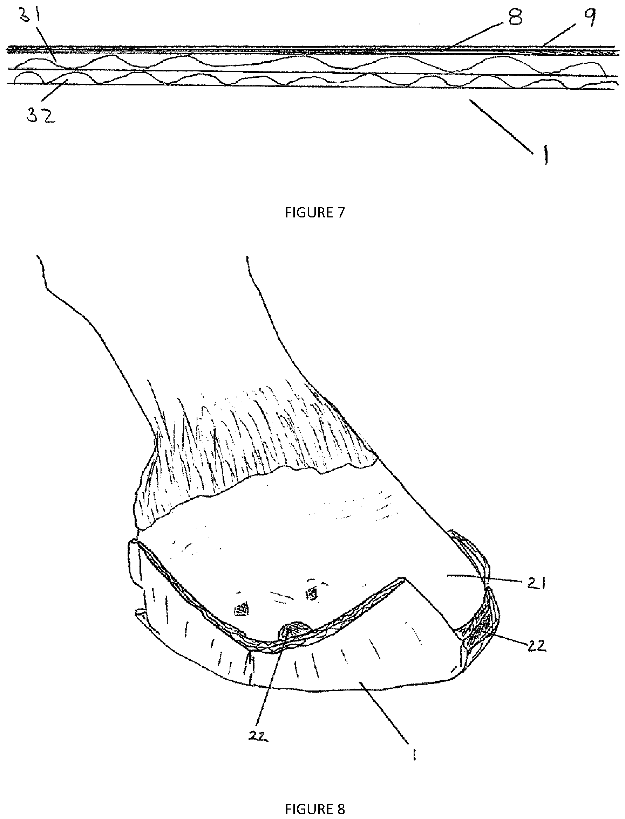

Figure 7 shows a side view of the elements of the arrangement 1, in an example where the corrugated cardboard has two layers of corrugation. The first layer of corrugation 31 is thicker than the second layer of corrugation 32 in the example shown in Figure 6, but the thickness of these layers may be determined based upon requirements for the arrangement 1. In some circumstances, there may be a single layer of corrugation.

Also shown in Figure 6 is the layer of adhesive 8 and the protective or backing layer 9.

Turning now to Figure 8, there is shown a horse's leg, horses' hoof 21, part of a horse shoe 22, and an arrangement 1 in accordance with the disclosures herein. The arrangement 1 is shown adhered to the horse's shoe 22 and hoof 21, and the arrangement 1 is folded upwardly, at each corner thereof, away from the plane of the sheet of the arrangement 1. It can be seen from Figure 8 that the arrangement 1 is folded to at least partially surround a horse's hoof 21 in order to facilitate retention of the sheet thereon.

It is demonstrated in Figure 8 how, when an arrangement 1 is affixed to a horse's shoe 22 and hoof 21 and folded upwardly, the deformability of the arrangement 1 is such that it takes the shape of the shoe 22 and hoof 21.

It is envisaged that a former in accordance with the disclosures herein may be developed which includes areas of a first level of compressibility and deformation, and areas of a second level of compressibility and deformation, such that the shape of the recess formed when the former is applied to a horse's foot and shoe may be optimised or tuned to provide a particular effect when back-filled.

In use, a horse shoe is applied to a horse's foot in the usual way, for example using nails which pass through the shoe and into the hoof. An anti-microbial preparation may be applied between the hoof and the shoe to reduce the likelihood of the build-up of bacteria or other undesirable microbes within the horse's hoof.

Further, a mesh or net may be placed between the hoof and shoe, cut to fit such that it does not protrude out of the join between the shoe and the hoof. This mesh or net may be used to provide a matrix or support for the glue or sealant which is to be applied.

When the shoe is affixed to the hoof, a horse shoeing former in accordance with that described herein may be adhered to the shoe, such that the adhesive side of the former is adhered to the side of the shoe which would come into contact with the ground. The edges of the former may be folded in an upward direction, around the horse's hoof, and the horse may then be encouraged to place its hoof on the ground, such that the former is compressed by the weight of the horse bearing upon the former.

This compression of the former provides a surface against which the glue or sealant may be delivered which is recessed from the surface of the horse's shoe with respect to the ground.

The glue or sealant to be delivered may then be applied, usually by way of an applicator which includes a nozzle - the nozzle may be placed within the gap provided between the horse's hoof, the horse shoe, and the former, such that the gap may be back-filled.

The glue or sealant is then left to cure. Once cured, the former may be removed from the horse's shoe and hoof, for inspection of the application of the glue or sealant. If the application of the glue or sealant is not adequate or is unsuccessful, the former may be reapplied to the horse's shoe and hoof, reusing the adhesive on the former, and using the imprint of the hoof on the former such that the shape of the former is substantially the same, with respect to the horse's hoof, as when it was removed.

With the former reapplied, further glue or sealant may be delivered into the gap, and again once cured, the former may be removed.

If the former is not to be used any further, the glue layer may be removed from the former, such that the former is separated into a disposable glue layer and a recyclable cardboard layer. The disposable glue layer may then be disposed of with refuse, and the cardboard layer recycled.

While the invention has been illustrated and described in detail in the drawings and preceding description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. Each feature of the disclosed embodiments may be replaced by alternative features serving the same, equivalent or similar purpose, unless stated otherwise. Therefore, unless stated otherwise, each feature disclosed is one example of a generic series of equivalent or similar features.

In the claims, the word "comprising" does not exclude other elements or steps, and the indefinite article "a" or "an" does not exclude a plurality. Any reference signs in the claims should not be construed as limiting the scope.

## Claims

1. An arrangement for providing a former for a horse's hoof, the arrangement including:
a sheet being substantially planar and having a first face, the sheet being formed of a compressibly deformable material, the sheet being of a size adequate to accommodate a horse shoe;
a layer of adhesive disposed on the first face of the sheet the layer of adhesive being configured to releasably adhere to a horse shoe; and
a removable element removably affixed to and covering the layer of adhesive, wherein
when a force is applied to the sheet by way of a horse shoe, the sheet is configured to deform in a non-reversible way, so as to form a cavity between the sheet and a horse's foot.

2. The arrangement of claim 1, wherein the sheet is configured to deform, preferably plastically, such that the cavity between the sheet and the horse's foot is substantially recessed with respect to a lowermost face of the horse shoe.

3. The arrangement of claim 1 or claim 2, wherein the sheet is foldable away from the plane of the sheet to at least partially surround a horse's hoof whereby to facilitate retention of the sheet thereon.

4. The arrangement of any preceding claim, wherein the sheet is formed of cardboard and particularly corrugated cardboard.

5. The arrangement of claim 4 or claim 5, wherein the cardboard includes at least one, preferably two, optionally more than two, layers of corrugation.

6. The arrangement of any previous claim, wherein the sheet further includes an area at or adjacent an edge thereof, onto which the layer of adhesive does not extend.

7. The arrangement of claim 6, wherein the area is a tab which extends from an edge of the sheet.

8. The arrangement of any previous claim, wherein the sheet is substantially trapezium-shaped and in particular an isosceles trapezium.

9. The arrangement of any previous claim, wherein the sheet includes scorings or lines of weakness to aid in folding of the sheet and in particular the scorings or lines of weakness are substantially perpendicular to an edge of the sheet.

10. The arrangement of claim 9 when dependent upon claim 5 or claim 6, wherein the scorings or lines of weakness are perpendicular to the corrugations in the corrugated cardboard.

11. The arrangement of claim 2, wherein the cavity is arranged to be filled with a glue or sealant.

12. The arrangement as claimed in any preceding claim in which the sheet is transparent whereby at least a part of the cavity can be viewed.

13. A method of providing a former for filling a cavity in a horse's hoof, comprising:
providing an arrangement in accordance with any one of claims 1 to 11;
removing the removable element so as to expose the layer of adhesive; and
placing the sheet against a shoe of a horse so as to deform the sheet whereby to create a cavity.

14. The method of claim 13 further including the step of folding the sheet away from the plane of the sheet to substantially contain a horse's hoof and to retain the sheet thereon and/or the sheet is folded along the scorings or lines of weakness.

15. The method of any one of claim 13 or claim 14, further including the step of filling the cavity with glue or sealant.
